# EUROPÄISCHE PATENTSCHRIFT

(11) **EP 2 865 487 B1**
(45) Veröffentlichungstag und Bekanntmachung des Hinweises auf die Patenterteilung: **14.09.2016**
(21) Anmeldenummer: 13189998.1
(22) Anmeldetag: 24.10.2013
(51) Int. Cl.: B24B 21/16, B24B 5/36, B23Q 11/00

(54) **Verfahren zum Kürzen der Laufschaufeln einer Strömungsmaschine**
Method for shortening the rotor blades of a flow engine
Procédé de raccourcissement des aubes d'une turbomachine

(43) Veröffentlichungstag der Anmeldung: 29.04.2015
(60) Teilanmeldung: 15003145.8
(73) Patentinhaber: Siemens Aktiengesellschaft, 80333 München (DE)
(72) Erfinder: Genz, Alexander, 16341 Zepernick (DE); Liedtke, Samuel, 16515 Oranienburg (DE); Lohse, Florian, 13595 Berlin (DE)

(56) Entgegenhaltungen:
- EP-A1- 0 483 064
- JP-A- S59 205 264
- US-A1- 2012 077 417

## Beschreibung

Die vorliegende Erfindung betrifft ein Verfahren zum Kürzen der Laufschaufeln einer Strömungsmaschine durch Materialabtrag an der Schaufelspitze .

Schaufeln von Strömungsmaschinen, insbesondere Turbinenschaufeln, unterliegen während des Betriebs einer sehr hohen Materialbeanspruchung und einem entsprechend großen Verschleiß. Aus diesem Grund werden die Schaufeln im Rahmen von Wartungsarbeiten normalerweise nach einer vorbestimmten Betriebsdauer durch neue Schaufeln ersetzt. Die Betriebsdauer ist dabei vorteilhaft derart gewählt, dass sich die ausgetauschten Schaufeln noch reparieren lassen.

Werden die Schaufeln einer Turbine ausgetauscht, so werden die Turbinenlaufschaufeln, die Turbinenleitschaufeln und die Führungssegmente ersetzt. Um bei einem solchen Austausch die Aufrechterhaltung der ursprünglichen Turbinenleistung gewährleisten zu können, muss auch bei den neuen Turbinenlaufschaufeln das originäre radiale Schaufelspaltmaß eingestellt werden. Hierzu werden die Schaufelspitzen der neuen Laufschaufeln vor ihrer Montage entsprechend durch Materialabtrag an der Schaufelspitze gekürzt. Da das radiale Spaltmaß nicht nur von den Fertigungstoleranzen der neuen Laufschaufeln sondern auch von weiteren Einflussfaktoren abhängig ist, ergibt sich der endgültige radiale Schaufelspalt erst nach komplettem Tausch aller Schaufeln. Als Einflussfaktoren sind hier beispielsweise die Kontur der neuen Leitschaufeln, die Kontur der neuen Führungsringe, die Beschichtung der neuen Leitschaufeln und Führungsringe, die Veränderung der Position der neuen Schaufeln relativ zur Position der ersetzten alten Schaufeln, die Fertigungstoleranzen von Gehäuse, Radscheibennuten und dergleichen zu nennen. Das sich endgültig einstellende Spaltmaß ist im Vorfeld entsprechend schwer und nur innerhalb eines recht weiten Toleranzbandes kalkulierbar.

Die Kürzung der Schaufelspitzen von Laufschaufeln erfolgt normalerweise im Rahmen einer Schleifbearbeitung unter Verwendung einer Schleifscheibe.

Im Läuferneubau ist es bekannt, den gesamten beschaufelten Läufer in eine große Schleifmaschine einzuspannen, woraufhin die Schaufeln mit gerader Schleifscheibe vollautomatisch auf die geforderte Länge geschliffen werden.

Im Rahmen von Wartungsarbeiten ist es bekannt, den Läufer einer Strömungsmaschine in einem ersten Schritt zu entstapeln. In einem weiteren Schritt können dann die Radscheiben als Ganzes in eine Schleifvorrichtung eingespannt werden. An dieser ist ein Schnellläufer mit gerader Schleifscheibe an einem Arm befestigt, der um die Schaufelspitzen kreist. Dabei sind ein automatischer Vorschub in zwei Richtungen sowie eine manuelle Zustellung realisiert.

Ferner ist es bekannt, Schaufeln einzeln zu schleifen. Die Schaufeln werden hierzu einzeln in eine Schleifvorrichtung eingespannt, die einen pneumatischen Schnellläufer mit gerader Schleifscheibe trägt. Der Schnellläufer pendelt um die Schaufelspitze und hat neben der Pendelbewegung einen automatischen Vorschub und eine manuelle Zustellung.

Eine weitere Alternative besteht darin, die Schaufelspitzen zwecks Kürzung zu fräsen. Bei den hierbei verwendeten CNC-Fräsmaschinen werden die Schaufeln einzeln eingespannt und auf die geforderte Länge gefräst.

Ein Nachteil der zum Kürzen von Laufschaufeln eingesetzten Schleifvorrichtungen mit gerader Schleifscheibe besteht darin, dass aufgrund der geringen Breite der Schleifscheibe, die im mobilen Einsatz bei etwa 20 mm liegt, ein Verfahren der Schleifscheibe entlang der Kontur der Schaufelspitze zwingend ist. Entsprechend ist ein automatischer Vorschub erforderlich, was zu einem komplexen Aufbau der Schleifvorrichtung ebenso wie zu hohen Kosten führt. Darüber hinaus geht mit dem automatischen Vorschub eine lange Bearbeitungsdauer einher.

Ein Nachteil der zum Kürzen von Laufschaufeln einer Strömungsmaschine eingesetzten Fräsverfahren ist zum einen darin zu sehen, dass diese sehr teuer sind, was nicht zuletzt auf die hohen Anschaffungskosten der verwendeten CNC-Fräsmaschinen und die hohen Werkzeugkosten zurückzuführen ist. Zum anderen sind die Fräsverfahren sehr langsam. So werden in der Praxis beispielsweise 12 Schichten ä 10 Stunden für die Bearbeitung von vier Turbinenstufen benötigt, um nur ein Beispiel zu nennen.

Die US 2012/0077417 A1 zeigt eine Bandschleifvorrichtung, die über eine Vorschubeinrichtung auf die Anströmkante einer Turbinenschaufel zugeführt werden kann.

Ausgehend von diesem Stand der Technik ist es eine Aufgabe der vorliegenden Erfindung, ein Verfahren zum Kürzen einer Laufschaufel einer Strömungsmaschine der eingangs genannten Art zu schaffen, das bzw. die ein preiswertes und wenig zeitintensives Kürzen von Laufschaufeln ermöglichen.

Zur Lösung dieser Aufgabe schafft die vorliegende Erfindung ein Verfahren zum Kürzen der Laufschaufeln einer Strömungsmaschine durch Materialabtrag an der Schaufelspitze, bei dem erfindungsgemäß zum Kürzen der Laufschaufel eine Bandschleifvorrichtung eingesetzt wird. Ein wesentlicher Vorteil des Einsatzes einer Bandschleifvorrichtung besteht darin, dass unter Verwendung eines Schleifbandes, das breiter als die zu kürzende Schaufelspitze ist, die gesamte Schaufelspitze in einem Arbeitsgang bearbeitet werden kann. Entsprechend ist im Gegensatz zur Schleifbearbeitung mit Schleifscheibe und zur Fräsbearbeitung kein Verfahren des Schleifbandes entlang der Kontur der Schaufelspitze nötig, was zu einer kompakten, leichten und preiswerten Bauweise führt. Darüber hinaus wird die Bearbeitungszeit verkürzt. Gemäß ersten Hochrechnungen der Anmelderin ist gegenüber einem Schleifen mit gerader Schleifscheibe eine Zeitersparnis von etwa 60 % und gegenüber einer Fräsbearbeitung sogar eine Zeitersparnis von 80 bis 90 % möglich. Die höheren Kosten für die Schleifbänder gegenüber einer geraden Schleifscheibe werden durch deutlich verkürzte Bearbeitungszeiten kompensiert. Gleiches gilt für die kürzeren Standzeiten von Schleifbändern gegenüber Schleifscheiben und Fräsern. Ein weiterer Vorteil des Einsatzes einer Bandschleifvorrichtung ist darin zu sehen, dass Schleifbänder nicht so anfällig für Transportschäden sind wie gerade Schleifscheiben oder Fräser. Darüber hinaus haben Versuche gezeigt, dass unter Verwendung einer Bandschleifvorrichtung ein Abplatzen der keramischen Beschichtung der Schaufeln nicht zu befürchten ist. Ferner werden bei der Schleifbearbeitung mit einem Schleifband keine oder nur geringe Grate erzeugt, was den Vorteil hat, dass keine bzw. nur geringere manuelle Nachbearbeitungen durchgeführt werden müssen. Noch ein weiterer Vorteil besteht darin, dass mit der verkürzten Bearbeitungszeit auch eine verkürzte Gefährdungszeit des Personals einhergeht.

Gemäß einer ersten Ausgestaltung des erfindungsgemäßen Verfahrens bleiben die Laufschaufeln während des Kürzens innerhalb eines Gehäuses der Strömungsmaschine eingebaut, wobei das Verfahren die Schritte aufweist: Entfernen eines Gehäuseteils unter zumindest teilweiser Freilegung der zu bearbeitenden Laufschaufeln sowie einer Teilfuge des Gehäuses; Befestigung einer Bandschleifvorrichtung an der Teilfuge des Gehäuses im Bereich der zu bearbeitenden Laufschaufeln; Ausrichten der Bandschleifvorrichtung relativ zu den zu kürzenden Laufschaufeln und Kürzen der Laufschaufeln in situ unter Verwendung der Bandschleifvorrichtung, während der Läufer kontinuierlich gedreht und der während der Schleifbearbeitung entstehende Schleifstaub abgesaugt wird. Diese Verfahrensvariante zeichnet sich insbesondere dadurch aus, dass die Laufschaufeln nicht ausgebaut werden müssen, was mit wenig Aufwand, einer erheblichen Zeitersparnis und geringen Kosten einhergeht. Darüber hinaus werden durch die Bearbeitung der Schaufeln im eingebauten Zustand sämtliche Toleranzketten zur Erstellung eines ordnungsgemäßen Schaufelspaltes automatisch berücksichtigt, was zu einem optimalen Bearbeitungsergebnis führt.

Bevorzugt werden Kühlluftbohrungen der zu kürzenden Schaufeln vor der Durchführung der Schleifbearbeitung abgedichtet oder abgedeckt. Die Abdichtung kann beispielsweise unter Verwendung von Wachs erfolgen. Wachs zeichnet sich insbesondere dadurch aus, dass es einen geringen Schmelzpunkt aufweist und beim Anfahren der Turbine automatisch verdampft und damit entfernt wird. Alternativ können die Kühlluftbohrungen aber auch abgedichtet werden, beispielsweise unter Verwendung einer geeigneten Klebefolie oder dergleichen.

Zum kontinuierlichen Drehen des Läufers wird bevorzugt eine Rotorhilfsdreheinrichtung eingesetzt, die im Stand der Technik grundsätzlich bekannt ist und daher vorliegend nicht näher erläutert werden muss.

Eine weitere Variante des erfindungsgemäßen Verfahrens weist die Schritte auf: Befestigung der Laufschaufeln an einer Dummy-Radscheibe, hierbei wird jede Laufschaufel sowohl radial als auch axial mittels Gewindebolzen in der Nut fixiert; Anordnen der Dummy-Radscheibe mit den daran gehaltenen Laufschaufeln an einer Dreheinrichtung, die zum Drehen der Dummy-Radscheibe um ihre Drehachse ausgelegt ist; Ausrichten der Bandschleifvorrichtung relativ zu den zu kürzenden Laufschaufeln und Kürzen der Laufschaufeln unter Verwendung der Bandschleifvorrichtung, während die Dummy-Radscheibe kontinuierlich gedreht wird.

Eine weitere Variante des erfindungsgemäßen Verfahrens weist die Schritte auf: Aufspannen des beschaufelten Läufers in einer Drehmaschine entsprechend dem Vorgehen im Läuferneubau-Schleifen; Einbringen von Blechstreifen in den Spalt zwischen Schaufelfuß und Nutgrund, um ein Wackeln der Schaufeln zu vermeiden und diese wie im Betrieb nach außen zu drücken; Ausrichten eines Schleifbandes der Bandschleifvorrichtung relativ zu den Laufschaufeln einer Schaufelreihe und Kürzen der Laufschaufel unter Verwendung der Bandschleifvorrichtung, während der Läufer in der Drehmaschine mit niedriger Drehzahl rotiert. Der Unterschied dieser erfindungsgemäßen Verfahrensvariante zum bisher eingesetzten Verfahren des Läuferneubau-Schleifens besteht in der Verwendung eines Bandschleifers anstelle der bisher eingesetzten geraden Schleifscheibe.

Bevorzugt wird während der Schleifbearbeitung entstehender Schleifstaub abgesaugt, um eine Verschmutzung der Umgebung zu vermeiden und den Bediener vor gegebenenfalls giftigen oder zumindest ungesunden Stäuben zu schützen.

Vorteilhaft werden Kühlluftbohrungen der zu kürzenden Laufschaufel vor der Durchführung der Schleifbearbeitung abgedichtet oder abgedeckt, wie es zuvor bereits geschrieben wurde.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist:
Figur 1 eine schematische Rückansicht einer Bandschleifvorrichtung gemäß einer ersten Ausführungsform der vorliegenden Erfindung;
Figur 2 eine schematische Seitenansicht der in Figur 1 dargestellten Bandschleifvorrichtung;
Figur 3 eine schematische Schnittansicht, welche die in den Figuren 1 und 2 dargestellte Bandschleifvorrichtung im bestimmungsgemäßen Zustand während des Kürzens einer Laufschaufel einer Strömungsmaschine zeigt; und
Figur 4 eine schematische perspektivische Ansicht einer Bandschleifvorrichtung gemäß einer zweiten Ausführungsform der vorliegenden Erfindung.

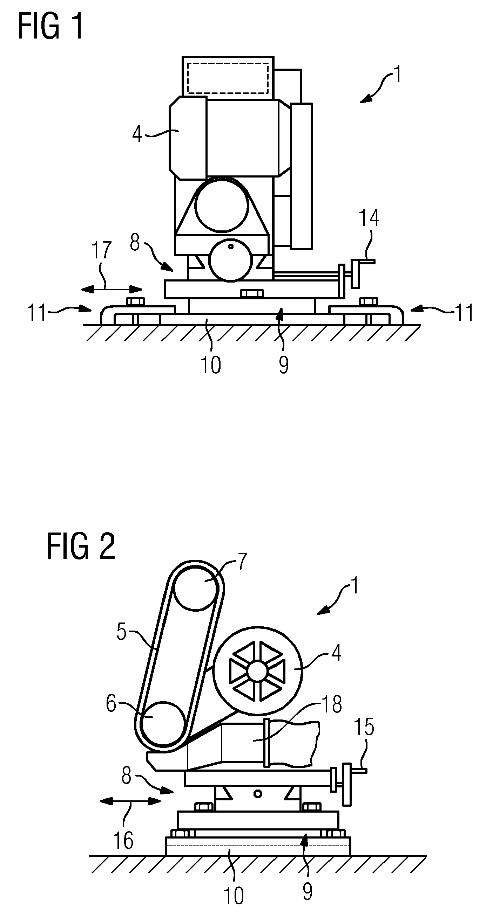

Die Figuren 1 und 2 zeigen eine Bandschleifvorrichtung gemäß einer ersten Ausführungsform der vorliegenden Erfindung, die zum Kürzen einer Laufschaufel 2 einer Strömungsmaschine 3 durch Materialabtrag einer Schaufelspitze dient, wie es nachfolgend noch näher erläutert wird.

Die Bandschleifvorrichtung 1 umfasst einen Motor 4, ein vom Motor 4 angetriebenes Schleifband 5, das um eine Kontaktrolle 6 und eine Spannrolle 7 gelegt und zwischen diesen gespannt ist, eine Vorschub-/Zustelleinrichtung 8 und eine Ausrichteinrichtung 9, wobei die zuvor genannten Komponenten auf einer Basisplatte 10 angeordnet sind. Ferner umfasst die Bandschleifvorrichtung 1 eine Befestigungseinrichtung 11, mit der die Basisplatte 10 an einer Teilfuge 12 einer unteren Gehäusehälfte 13 der Strömungsmaschine 3 befestigbar ist.

Die Vorschub-/Zustelleinrichtung 8 ist zur Realisierung der Vorschub- und Zustellbewegung des Schleifbandes 5 ausgelegt und wird vorliegend durch einen Kreuztisch 14 gebildet. Mit Hilfe der Vorschub-/Zustelleinrichtung 8 kann das Schleifband 5 durch Betätigen entsprechender Handräder 14 und 15 in zueinander senkrechten Richtungen bewegt werden, wie es durch die Doppelpfeile 16 und 17 angedeutet ist.

Die Ausrichteinrichtung 9 wird vorliegend durch eine drehbar gelagerte Platte gebildet, die von Hand gedreht und in beliebigen Drehpositionen festgelegt werden kann.

Die Vorschub-/Zustelleinrichtung 8 und/oder die Ausrichteinrichtung 9 kann/können mit einem berührungslosen Messsystem versehen sein, um den Abstand zu dem zu bearbeitenden Werkstück zu messen und auf diese Weise die Einstellung des Vorschubs bzw. der Zustellung und/oder die Ausrichtung des Schleifbandes 5 zum Werkstück zu unterstützen.

Die Befestigungseinrichtung 11 wird vorliegend durch Klemmstücke gebildet, die über Befestigungsschrauben und an der Teilfuge 12 der unteren Gehäusehälfte 13 vorhandene Gewindebohrungen an der Teilfuge 12 befestigt werden können.

Ferner umfasst die Bandschleifvorrichtung 1 eine Absaugeinrichtung 18, die vorliegend als separate Einheit vorgesehen ist. Alternativ kann diese aber auch integral mit der Bandschleifvorrichtung 1 ausgebildet sein. Die Absaugeinrichtung 18 umfasst einen nicht näher dargestellten Filter und dient zur Abscheidung karzinogener Stäube und Vermeidung von Staubexplosionen. Ferner umfasst die Absaugeinrichtung 18 ein nicht näher dargestelltes Sauggebläse, das stark genug ist, um den während einer Schleifbearbeitung entstehenden Schleifstaub vollständig oder zumindest nahezu vollständig abzusaugen.

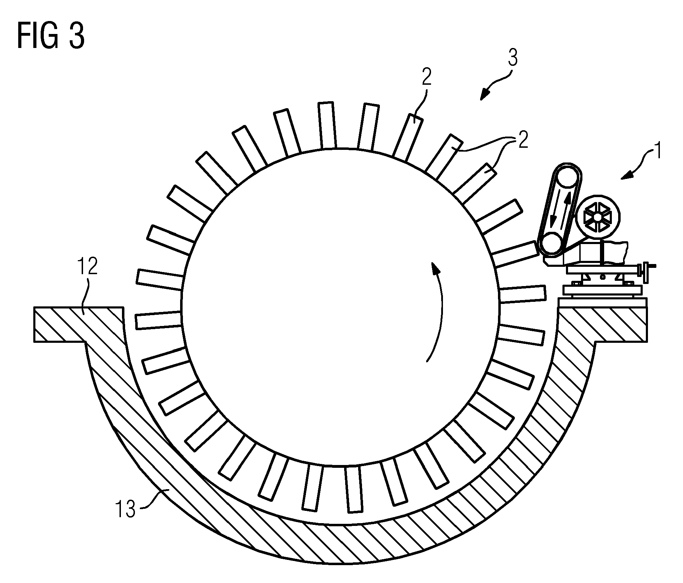

Zum Kürzen von Laufschaufeln einer Strömungsmaschine 3 im eingebauten Zustand wird, wie es in Figur 3 dargestellt ist, in einem ersten Schritt die obere Gehäusehälfte (nicht gezeigt) unter zumindest teilweiser Freilegung der zu bearbeitenden Laufschaufeln 2 sowie der Teilfuge 12 von der unteren Gehäusehälfte 13 abgehoben und entfernt. Daraufhin wird die Bandschleifvorrichtung 1 an der Teilfuge 12 der unteren Gehäusehälfte 13 im Bereich der zu bearbeitenden Laufschaufel 2 unter Einsatz der Befestigungseinrichtung 11 befestigt. In einem weiteren Schritt wird die Bandschleifvorrichtung 1 relativ zu den zu kürzenden Laufschaufel 2 ausgerichtet, indem die drehbar gelagerte Platte der Ausrichteinrichtung 9 gedreht und anschließend die Drehposition nach Erreichen der gewünschten Ausrichtung festgelegt wird. Nunmehr kann die Laufschaufel 2 in situ unter Verwendung der Bandschleifvorrichtung 1 bei entsprechender Betätigung der Vorschub-/Zustelleinrichtung 8 gekürzt werden, während der Läufer mit Hilfe einer nicht näher dargestellten Rotorhilfsdreheinrichtung kontinuierlich gedreht und der während der Schleifbearbeitung entstehende Schleifstaub unter Verwendung der Absaugeinrichtung 18 abgesaugt wird. Die Breite des Schleifbandes 5 ist breiter als die Breite der Schaufelspitze gewählt, so dass zur Kürzung der Laufschaufel 2 kein Verfahren des Schleifbandes 5 entlang der Kontur der Schaufelspitze erforderlich ist. Um zu verhindern, dass der Schleifstaub den Bearbeitungsbereich verlässt, können optional Bürsten oder Prallplatten verwendet werden, die den Staub im gewünschten Bereich halten, auch wenn dies vorliegend nicht näher dargestellt ist.

Wenn zu befürchten ist, dass die Absaugeinrichtung 18 ein Verstopfen der Kühlluftbohrungen der zu kürzenden Laufschaufeln 2 mit Schleifstaub nicht verhindern kann, können die Kühlluftbohrungen der zu kürzenden Laufschaufeln 2 vor der Durchführung der Schleifbearbeitung abgedichtet oder abgedeckt werden. Die Abdichtung kann beispielsweise unter Verwendung von Wachs erfolgen. Zur Abdeckung kann beispielsweise einer Klebefolie oder dergleichen eingesetzt werden.

Bei einem weiteren Verfahren gemäß einer Ausführungsform der vorliegenden Erfindung können zu kürzende Laufschaufeln 2 bei der Neuherstellung oder im Rahmen einer Überarbeitung auch an einer Dummy-Radscheibe befestigt werden, die dann auf einer Dreheinrichtung montiert wird. Die Dreheinrichtung ist dabei derart ausgelegt, dass sie die Dummy-Radscheibe um ihre Drehachse kontinuierlich dreht. Eine Bandschleifvorrichtung, wie beispielsweise eine an einem Gestell angeordnete Bandschleifvorrichtung 1, wie sie in den Figuren 1 und 2 dargestellt ist, kann daraufhin zu den zu kürzenden Laufschaufeln 2 ausgerichtet werden, woraufhin die Kürzung der Laufschaufeln 2 bei sich kontinuierlich drehender Dummy-Radscheibe erfolgt. Auch bei dieser Variante des erfindungsgemäßen Verfahrens wird der während der Schleifbearbeitung entstehende Schleifstaub bevorzugt unter Verwendung einer entsprechenden Absaugeinrichtung abgesaugt. Zusätzlich können die Kühlluftbohrungen der zu kürzenden Laufschaufeln auch vor der Durchführung der Schleifbearbeitung abgedichtet oder abgedeckt werden. Alternativ können die Laufschaufeln nach dem Kürzen aber auch einfach gereinigt werden.

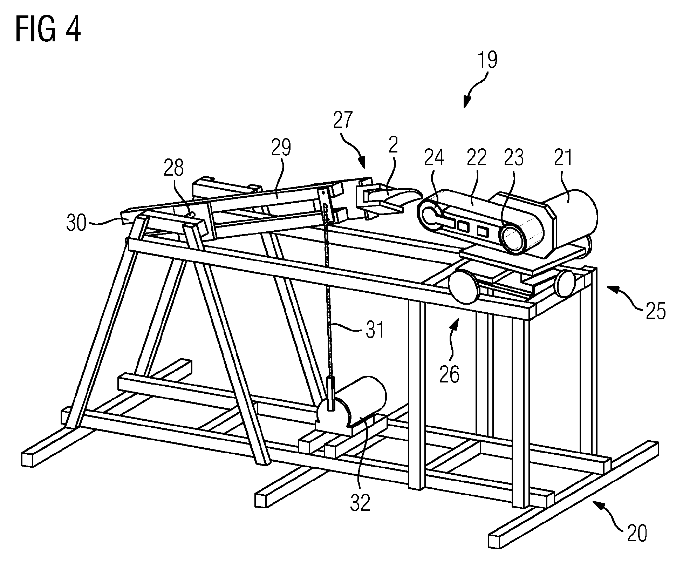

Figur 4 zeigt eine Bandschleifvorrichtung 19 die zum Kürzen einer Leitschaufel 2 im ausgebauten Zustand durch Materialabtrag an der Schaufelspitze dient. Die Bandschleifvorrichtung 1 umfasst ein Gestell 20, einen Motor 21, ein vom Motor 21 angetriebenes Schleifband 22, das mit um eine Kontaktrolle 23 und eine Spannrolle 24 gelegt und zwischen diesen gespannt ist, eine Vorschub-/Zustelleinrichtung 25, die zur Realisierung der Vorschub- und Zustellbewegung des Schleifbandes 22 ausgelegt ist, eine Auslegeinrichtung 26, die zum relativen Ausrichten des Schleifbandes 22 und einer zu kürzenden Laufschaufel 2 ausgelegt ist, und eine zur Aufnahme der Laufschaufel 2 ausgelegte Schnellwechseleinrichtung 27, die an einem Gestell 20 schwenkbar um eine Schwenkachse 28 gehaltenen Schwenkarm 29 befestigt ist, der an seinem freien Ende mit einem Gegengewicht 30 versehen ist. Der Schwenkarm 29 ist über eine gelenkig verbundene, längenverstellbare Stange 31 mit einem die Hubbewegung des Schwenkarms 29 realisierenden Antrieb 32 verbunden, der am Gestell 20 montiert ist.

Auch die Bandschleifvorrichtung 19 kann mit einer Absaugeinrichtung 18 ausgestattet sein, wenn dies gewünscht ist, auch wenn eine solche Absaugeinrichtung 18 in Figur 4 nicht dargestellt ist.

Die Vorschub-/Zustelleinrichtung 25, die Ausrichteinrichtung 26 und die Absaugeinrichtung 18 können analog zu den entsprechenden Komponenten der in den Figuren 1 bis 3 dargestellten Bandschleifvorrichtung 1 ausgebildet sein, weshalb an dieser Stelle auf eine erneute Beschreibung verzichtet wird.

Ein wesentlicher Vorteil des erfindungsgemäßen Verfahrens zum Kürzen von Laufschaufeln einer Strömungsmaschine durch Materialabtrag an der Schaufelspitze besteht darin, dass unter Verwendung eines Schleifbandes, das breiter als die zu kürzende Schaufelspitze ist, die gesamte Schaufelspitze in einem Arbeitsgang bearbeitet werden kann. Entsprechend ist im Gegensatz zur Schleifbearbeitung mit einer Schleifscheibe und zur Fräsbearbeitung kein Verfahren des Schleifbandes entlang der Kontur der Schaufelspitze nötig, was zu einer kompakten, leichten und preiswerten Bauweise führt. Darüber hinaus wird die Bearbeitungszeit entscheidend verkürzt. Ein weiterer Vorteil des Einsatzes einer Bandschleifvorrichtung ist darin zu sehen, dass Schleifbänder nicht so anfällig für Transportschäden sind wie gerade Schleifscheiben oder Fräser. Darüber hinaus haben Versuche gezeigt, dass unter Verwendung einer Bandschleifvorrichtung ein Abplatzen der keramischen Beschichtung der Schaufeln nicht zu befürchten ist. Ferner werden bei der Schleifbearbeitung mit einem Schleifband keine oder nur geringe Grate erzeugt, was den Vorteil hat, dass keine bzw. nur geringere manuelle Nachbearbeitungen durchgeführt werden müssen. Noch ein weiterer Vorteil besteht darin, dass mit der verkürzten Bearbeitungszeit auch eine verkürzte Gefährdungszeit des Personals einhergeht.

## Patentansprüche

1. Verfahren zum Kürzen zumindest einer Laufschaufel (2) einer Strömungsmaschine (3) durch Materialabtrag an der Schaufelspitze, **dadurch gekennzeichnet, dass** zum Kürzen der Laufschaufel (2) eine Bandschleifvorrichtung (1; 19) eingesetzt wird, bei dem die Laufschaufeln (2) während des Kürzens innerhalb eines Gehäuses der Strömungsmaschine (3) eingebaut bleiben, wobei das Verfahren die Schritte aufweist:
- Entfernen eines Gehäuseteils unter zumindest teilweiser Freilegung der zu bearbeitenden Laufschaufeln (2) sowie einer Teilfuge (12) des Gehäuses;
- Befestigen einer Bandschleifvorrichtung (1) an der Teilfuge (12) des Gehäuses im Bereich der zu bearbeitenden Laufschaufeln (2);
- Ausrichten der Bandschleifvorrichtung (1) relativ zu den zu kürzenden Laufschaufeln (2) und
- Kürzen der Laufschaufeln (2) in situ unter Verwendung der Bandschleifvorrichtung (1), während der Läufer kontinuierlich gedreht und der während der Schleifbearbeitung entstehende Schleifstaub abgesaugt wird.

2. Verfahren nach Anspruch 1,
bei dem Kühlluftbohrungen der zu kürzenden Laufschaufeln (2) vor der Durchführung der Schleifbearbeitung abgedichtet oder abgedeckt werden.

3. Verfahren nach Anspruch 1 oder 2,
bei dem zum kontinuierlichen Drehen des Läufers eine Rotorhilfsdreheinrichtung eingesetzt wird.

4. Verfahren nach Anspruch 1,
das die Schritte aufweist:
- Befestigung der Laufschaufeln (2) an einer Dummy-Radscheibe oder in einem kompletten Läufer;
- Anordnen der Dummy-Radscheibe oder des Läufers mit den daran gehaltenen Laufschaufeln (2) an einer Dreheinrichtung, die zum Drehen der Dummy-Radscheibe bzw. des Läufers um die Drehachse ausgelegt ist;
- Ausrichten der Bandschleifvorrichtung (1) relativ zu den zu kürzenden Laufschaufeln (2) und
- Kürzen der Laufschaufeln (2) unter Verwendung der Bandschleifvorrichtung (1), während die Dummy-Radscheibe bzw. der Läufer kontinuierlich gedreht wird.

5. Verfahren nach Anspruch 1,
wobei das Verfahren die Schritte aufweist:
- Ausbau einer zu kürzenden Laufschaufel (2) aus der Strömungsmaschine (3);
- Befestigen der Laufschaufel (2) an einer zur Aufnahme der Laufschaufel (2) ausgelegten Schnellwechseleinrichtung (27) einer Bandschleifvorrichtung (19);
- Ausrichten eines Schleifbandes (22) der Bandschleifvorrichtung (19) relativ zu der Laufschaufel (2) und
- Kürzen der Laufschaufel (2) unter Verwendung der Bandschleifvorrichtung (19), während die Schnellwechseleinrichtung (27) zusammen mit der an dieser befestigten Laufschaufel (2) um eine Schwenkachse (28) verschwenkt wird.

6. Verfahren nach Anspruch 4 oder 5,
bei dem während der Schleifbearbeitung entstehender Schleifstaub abgesaugt wird.

7. Verfahren nach einem der Ansprüche 4 bis 6,
bei dem Kühlluftbohrungen der zu kürzenden Laufschaufel (2) vor der Durchführung der Schleifbearbeitung abgedichtet oder abgedeckt werden.

## Claims

1. Method for shortening at least one rotor blade (2) of a turbomachine (3) by removal of material at the blade tip, **characterized in that** a belt grinding apparatus (1; 19) is used to shorten the rotor blade (2), in which the rotor blades (2) remain installed in a casing of the turbomachine (3) during the shortening, wherein the method has the steps of:
- removing a casing part, at least partially exposing the rotor blades (2) to be machined and a parting joint (12) of the casing;
- attaching a belt grinding apparatus (1) to the parting joint (12) of the casing in the region of the rotor blades (2) to be machined;
- orienting the belt grinding apparatus (1) relative to the rotor blades (2) to be shortened and
- shortening the rotor blades (2) in situ using the belt grinding apparatus (1) while the rotor is continuously rotated and the grinding dust produced during the grinding machining is extracted.

2. Method according to Claim 1, in which cooling air bores of the rotor blades (2) to be shortened are sealed or covered before the grinding machining is carried out.

3. Method according to Claim 1 or 2, in which an auxiliary rotor rotating device is used to continuously rotate the rotor.

4. Method according to Claim 1, having the steps of:
- attaching the rotor blades (2) to a dummy rotor disk or in a complete rotor;
- arranging the dummy rotor disk or the rotor with the rotor blades (2) held thereon on a rotating device which is configured to rotate the dummy rotor disk or the rotor about the axis of rotation;
- orienting the belt grinding apparatus (1) relative to the rotor blades (2) to be shortened and
- shortening the rotor blades (2) using the belt grinding apparatus (1) while the dummy rotor disk or the rotor is continuously rotated.

5. Method according to Claim 1, wherein the method has the steps of:
- removing, from the turbomachine (3), a rotor blade (2) to be shortened;
- attaching the rotor blade (2) to a quick-release device (27) of a belt grinding apparatus (19), which is configured to receive the rotor blade (2);
- orienting a grinding belt (22) of the belt grinding apparatus (19) relative to the rotor blade (2) and
- shortening the rotor blade (2) using the belt grinding apparatus (19) while the quick-release device (27), together with the rotor blade (2) attached thereto, is pivoted about a pivot axis (28).

6. Method according to Claim 4 or 5, in which grinding dust produced during the grinding machining is extracted.

7. Method according to one of Claims 4 to 6, in which cooling air bores of the rotor blade (2) to be shortened are sealed or covered before the grinding machining is carried out.

## Revendications

1. Procédé de raccourcissement d'au moins une aube ( 2 ) mobile d'une turbomachine ( 3 ) par enlèvement de matière à la pointe de l'aube, **caractérisé en ce que**, pour raccourcir l'aube ( 2 ) mobile, on utilise un dispositif ( 1; 19 ) abrasif à ruban, dans lequel les aubes ( 2 ) mobiles restent, pendant le raccourcissement, montées à l'intérieur d'une carcasse de la turbomachine ( 3 ), le procédé ayant les stades :
- enlèvement d'une partie de la carcasse en dégageant, au moins en partie, les aubes ( 2 ) mobiles à usiner ainsi qu'un joint ( 12 )de la carcasse ;
- fixation d'un dispositif ( 11 ) abrasif à ruban au joint ( 12 ) de la carcasse dans la région des aubes ( 2 ) mobiles à usiner ;
- orientation du dispositif ( 1 ) abrasif à ruban par rapport aux aubes ( 2 ) mobiles à raccourcir et
- raccourcissement des aubes ( 2 ) mobiles in situ, en utilisant le dispositif ( 1 ) abrasif à ruban, tandis que l'on fait tourner continuellement l'induit et que l'on aspire la poussière d'abrasion créée pendant l'abrasion.

2. Procédé suivant la revendication 1, dans lequel on rend étanches ou on recouvre des ouies d'air de refroidissement des aubes ( 2 ) mobiles à raccourcir avant d'effectuer l'abrasion.

3. Procédé suivant les revendications 1 ou 2, dans lequel on utilise un dispositif auxiliaire de rotation du rotor pour faire tourner en continu l'induit.

4. Procédé suivant la revendication 1,
qui a les stades de :
- on fixe des aubes ( 2 ) mobiles à un disque de roue dummy ou dans un induit complet ;
- on met le disque de roue dummy ou l'induit avec les aubes ( 2 ) mobiles qui y sont retenues sur un dispositif de rotation, qui est conçu pour entraîner le disque de roue dummy ou l'induit autour de l'axe de rotation ;
- on oriente le dispositif ( 1 ) d'abrasion à ruban par rapport aux aubes ( 2 ) mobiles à raccourcir ;
- on raccourcit les aubes ( 2 ) mobiles en utilisant le dispositif ( 1 ) d'abrasion à ruban pendant que l'on fait tourner continuellement le disque de roue dummy ou l'induit.

5. Procédé suivant la revendication 1,
dans lequel le procédé a les stades :
- démontage d'une aube ( 2 ) mobile à raccourcir de la turbomachine ( 3 ) ;
- fixation de l'aube ( 2 ) mobile sur un dispositif ( 27 ) de remplacement rapide d'un dispositif ( 19 ) d'abrasion à ruban conçu pour la réception de l'aube ( 2 ) mobile ;
- orientation d'un ruban ( 22 ) abrasif du dispositif ( 19 ) d'abrasion à ruban par rapport à l'aube ( 2 ) mobile et ;
- raccourcissement de l'aube ( 2 ) mobile en utilisant le dispositif ( 19 ) d'abrasion à ruban, tandis que l'on fait pivoter, autour d'un axe ( 28 ) de pivotement, le dispositif ( 27 ) de changement rapide, ensemble avec l'aube ( 2 ) mobile qui y est fixée.

6. Procédé suivant les revendications 4 ou 5, dans lequel on aspire de la poussière d'abrasion créée pendant l'abrasion.

7. Procédé suivant les revendications 4 à 6 dans lequel on rend étanche ou on recouvre des ouies d'air de refroidissement de l'aube ( 2 ) mobile à raccourcir avant d'effectuer l'abrasion.
